# EUROPÄISCHE PATENTANMELDUNG

(11) **EP 4 737 980 A1**
(43) Veröffentlichungstag der Anmeldung: **06.05.2026**
(21) Anmeldenummer: 25210437.7
(22) Anmeldetag: 22.10.2025
(51) Int. Cl.: G02B 26/08, G02B 26/10

(54) **OPTISCHE VORRICHTUNG ZUM MANIPULIEREN EINES ATOMS ODER EINES OBJEKTS**

(30) Priorität: 31.10.2024 DE 102024131876
(71) Anmelder: Rheinland-Pfälzische Technische Universität Kaiserslautern-Landau, 67663 Kaiserslautern (DE)
(72) Erfinder: WIDERA, Artur, 67663 Kaiserslautern (DE); Ott, Herwig, 67663 Kaiserslautern (DE); Niederprüm, Thomas, 67663 Kaiserslautern (DE)
(74) Vertreter: Durm Patentanwälte PartG mbB

(57) **Zusammenfassung**

Eine optische Vorrichtung (10) zum Manipulieren eines Atoms oder eines Objekts umfasst eine Lichtquelle (12) zum Aussenden eines kurzwelligen elektromagnetischen Strahls (20); und ein bewegbares optisches Element (30) zur Beeinflussung des Strahls (20); dadurch gekennzeichnet, dass das optische Element (30) eine 3D-Beweglichkeit aufweist; der Strahl (20) der Lichtquelle (12) zu dem optischen Element (30) gelenkt wird und im Strahlengang danach in einem Fokuspunkt (40) fokussiert wird; wobei das optische Element (30) derart eingerichtet und ausgebildet ist, dass durch die Bewegung des optischen Elements (30) der Fokuspunkt (40) verschiebbar ist und eine räumliche Manipulation des Atoms oder Objekts in einer Umgebung (42) um den Fokuspunkt (40) bewirkt wird.

## Beschreibung

Die vorliegende Erfindung betrifft eine optische Vorrichtung zum Manipulieren eines Atoms oder eines Objekts mit einer Lichtquelle, die einen kurzwelligen elektromagnetischen Strahl aussendet, und mit einem bewegbaren optischen Element zur Beeinflussung des Strahls.

Derartige Vorrichtungen sind auch als optische Pinzetten bekannt, mit denen Atome oder Partikel, also Objekte, oder auch Moleküle beeinflusst werden können. Die Beeinflussung oder Manipulation betrifft beispielsweise das Festhalten oder Bewegen des Atoms in eine Richtung quer zum Strahl. Optische Pinzetten sind stark fokussierte Laserstrahlen mit einem typischen Fokusdurchmesser von wenigstens 0,1 µm und größer. Sie werden seit vielen Jahren eingesetzt, beispielsweise um Materie zu manipulieren.

Mit bisherigen Technologien können optische Pinzetten meist nur in zwei Raumrichtungen senkrecht zur Strahlrichtung bewegt werden. Dazu werden zum Beispiel kippbare Spiegel verwendet, wie in Stuart & Kuhn, New J. Phys. 20 023013 (2018) (https:/doi.org/10.1088/1367-2630/aaa634) beschrieben, oder akusto-optische Modulatoren und Deflektoren, wie aus Barredo et al., Science 354, 1021-1023 (2016) (https: /doi.org/10.1126/science.aah3778) oder Endres et al., Science 354, 1024-1027 (2016) (https://doi.org/10.1126/science.aah3752) bekannt. Ebenso können gemäß Dumke et al., Phys. Rev. Lett. 89, 097903 (2002) Mikrolinsenarrays oder nach Nogrette et al., PRX 4, 021034 (2014) (https://doi.org/10.1103/PhysRevX.4.021034) sogenannte Phasen-Spatial-Light-Modulatoren verwendet werden. Während letztere Methoden auch statische dreidimensionale Pinzettenanordnungen erlauben (Schlosser et al., Phys. Rev. Lett.130, 180601 (2023) (https://doi.orq/10.1103/PhysRevLett.130.180601) und Barredo et al., Nature 561, 79 (2018) (https://doi.org/10.1038/s41586-018-0450-2), ist eine Bewegung in drei Dimensionen nur durch ein weiteres optisches Element möglich, welches den Fokus verschiebt. Dazu können mechanische Verschiebetische, elektrisch krümmbare Spiegel nach Huang et al., Rev. Sei. Instrum. 80, 063107 (2009) (https://doi.orq/10.1063/1.3156838), oder Linsen mit verstellbarer Brennweite ("tunable lenses") nach Iwai et al., Scientific Reports, 9, 12365 (2019) (https://doi.org/10.1038), eingesetzt werden. Diese Ansätze besitzen jedoch entscheidende Nachteile:
1. Es werden zwei verschiedene optische Elemente benötigt, die präzise aufeinander justiert werden müssen. Die Bandbreite ist gemäß Iwai et al. limitiert auf weniger als 1 kHz. Das mechanische Verschieben der Fokussierlinse ist aufgrund der hohen bewegten Masse ebenso wie das Bewegen des Probenhalters auf wenige Hz Bandbreite beschränkt.
2. Eine Erweiterung auf mehr als eine optische Pinzette erfordert die Vervielfachung der optischen Aufbauten und eine anschließende Überlagerung aller optischen Pinzetten mittels komplexer und justageintensiver Optik.
3. Holographische Verfahren ("Phase SLMs") benötigen aufwendige Berechnungen, um das nötige Phasenmuster zu berechnen. Diese Berechnungen können nicht schnell genug durchgeführt werden, um eine schnelle Bewegung der Pinzetten zu ermöglichen.

Der Stand der Technik bietet keine Möglichkeit, optische Pinzetten mit einer hohen Geschwindigkeit in drei Dimensionen zu bewegen, um einzelne oder mehrere Atome schnell zu bewegen und in eine gewünschte Position zu bringen. Schnell bedeutet in diesem Zusammenhang mit einer Bandbreite von mehr als 1 kHz oder einer "Verfahrgeschwindigkeit", bei der der zurückzulegende Weg innerhalb von weniger als zwei Millisekunden durchlaufen wird. Wenn mehrere optische Pinzetten erzeugt und schnell bewegt werden müssen, ist das nach aktuellem Stand der Technik nur eindimensional (1D) oder zweidimensional (2D) realisierbar, jedoch nicht dreidimensional (3D).

Es besteht somit ein großer Bedarf, eine optische Pinzette vorzuschlagen, die eine schnelle und präzise Bewegung in drei Dimensionen mit nur einem optischen Element erlaubt. Weiter besteht ein Bedarf, mehrere solcher optischen Pinzetten unabhängig voneinander und vorzugsweise auch gleichzeitig zu bewegen.

Gelöst wird die vorliegende Aufgabe durch eine optische Vorrichtung zum Manipulieren eines Atoms oder eines Objekts mit den Merkmalen des Anspruchs 1. Darüber hinaus wird die Aufgabe von einer optischen Pinzette mit den Merkmalen des Anspruchs 18 und von einem System mit den Merkmalen des Anspruchs 19 gelöst.

In einem Aspekt betrifft die vorliegende Erfindung eine optische Vorrichtung zum Manipulieren eines Atoms oder eines Objekts mit einer Lichtquelle zum Aussenden eines kurzwelligen elektromagnetischen Strahls und mit einem beweglichen optischen Element zur Beeinflussung des Strahls. Das optische Element weist eine dreidimensionale Beweglichkeit (3D-Beweglichkeit) auf. Der Strahl der Lichtquelle wird zu dem optischen Element gelenkt und im Strahlengang danach in einem Fokuspunkt fokussiert. Die optische Vorrichtung ist entsprechend aufgebaut und ausgebildet. Das optische Element ist derart eingerichtet und ausgebildet, dass durch die Bewegung des optischen Elements der Fokuspunkt verschiebbar ist und eine räumliche Manipulation des Atoms oder Objekts in einer Umgebung um den Fokuspunkt bewirkt wird. Hierbei wird eine dreidimensionale Bewegung bzw. Manipulation ermöglicht, die auch eine Bewegung in Strahlrichtung zulässt.

In einem weiteren Aspekt betrifft die vorliegende Erfindung eine optische Pinzette, die gemäß der gerade beschriebenen Vorrichtung aufgebaut ist. Die optischen Pinzetten basieren auf einer Vorrichtung, wie sie oben beschrieben wurde, und ermöglichen damit eine Ausführung der Bewegung des Fokuspunktes. Sie ermöglichen damit eine Manipulation eines Objekts oder Atoms oder mehrerer Atome in drei Raumrichtungen, einschließlich einer Richtung in Strahlrichtung.

Weitere Aspekte der Erfindung betreffen ein entsprechendes Verfahren und ein Computerprogrammprodukt mit Programmcode zum Durchführen der Schritte des Verfahrens, wenn der Programmcode auf einem Computer ausgeführt wird, sowie ein Speichermedium, auf dem ein Computerprogramm gespeichert ist, das, wenn es auf einem Computer ausgeführt wird, eine Ausführung des hierin beschriebenen Verfahrens bewirkt.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können das Verfahren und das Computerprogrammprodukt entsprechend der für die Vorrichtung in den abhängigen Ansprüchen beschriebenen Ausgestaltungen ausgeführt sein.

Der Erfindung liegt die Idee zugrunde, ein miniaturisiertes optisches Element, wie etwa einen Spiegel oder Mikrospiegel, in einen Laserstrahl einzubringen. Der Laserstrahl ist bevorzugt konvergierend oder divergierend. Das optische Element (Mikroelement) weist eine 3D-Beweglichkeit auf, ist also in drei Raumdimensionen bzw. -richtungen beweglich. Hierbei lässt sich das optische Element beispielsweise translatorisch bewegen und zusätzlich in wenigstens zwei Raumrichtungen verkippen. Während die Kippbewegungen dafür zuständig sind, dass ein im Laserfokus oder Fokuspunkt angeordnetes Objekt oder Atom oder ein in der Nähe des Fokuspunkts angeordnetes Objekt oder Atom senkrecht zur Strahlrichtung bewegt und manipuliert werden kann, bewirkt die translatorische Bewegung des optischen Elements eine Verschiebung in und entgegen der Strahlrichtung. Die Strahlrichtung ist dabei die Richtung des Laserstrahls im Strahlengang.

Durch die neben den rotatorischen Bewegungen möglichen translatorischen und transversalen Bewegungen des optischen Elements lassen sich Manipulationsrichtungen an dem Atom oder Objekt ebenfalls in translatorischer oder transversaler Richtung realisieren. Vorteilhaft ist es hierbei, dass lediglich ein optisches Element verwendet werden muss. Dieses muss jedoch in drei Raumrichtungen beweglich sein.

Beispielsweise kann eine dreidimensionale Beweglichkeit durch Auflagepunkte des mikrooptischen oder optischen Elements erzielt werden. Somit lassen sich sowohl translatorische als auch verkippende Bewegungen des Elements erzielen.

Unter dem Begriff 3D-Beweglichkeit des optischen Elements wird eine Beweglichkeit in drei Raumdimensionen bzw. Raumrichtungen verstanden, wobei die Beweglichkeit in die Raumrichtungen unabhängig voneinander erfolgen kann und in mehrere Raumrichtungen gleichzeitig oder zeitlich versetzt erfolgen kann.

Somit kann die Erfindung bevorzugt in Quantencomputern eingesetzt werden, bei denen der Einsatz von Atomarrays eine stark zunehmende Rolle spielt. Insbesondere bei der Realisierung von mehreren "parallel" (aber unabhängig voneinander) arbeitenden erfindungsgemäßen optischen Vorrichtungen (sogenannte optische Pinzetten) ist dies der Fall.

In einer bevorzugten Ausführungsform ist im Strahlengang zwischen dem optischen Element und dem Fokuspunkt eine Objektivlinse angeordnet. Der Einsatz der Objektivlinse führt dazu, dass der Strahl der Lichtquelle in dem Fokuspunkt fokussiert werden kann. Zusätzlich oder alternativ kann in dem Strahlengang zwischen der Lichtquelle und dem optischen Element eine Linse angeordnet sein. Bevorzugt wird die Linse dazu verwendet, um den Strahlengang der Lichtquelle so zu ändern, dass vorzugsweise vor dem optischen Element ein Fokus des Lichtstrahls erzeugt wird. Das optische Element selbst liegt bevorzugt außerhalb eines ersten Fokus im Strahlengang des Strahls der Lichtquelle.

Eine bevorzugte Ausführungsform sieht vor, dass der erzeugte Fokuspunkt in einer räumlichen Ausdehnung des Atoms oder des Objekts liegt. Das Objekt oder das Atom sind also derart angeordnet, dass der von der Lichtquelle und der Vorrichtung erzeugte Fokuspunkt des Strahls der Lichtquelle innerhalb des Objekts liegt. Anders gesagt ist der Strahl so ausgerichtet und gelenkt, dass sein Fokuspunkt am oder in der Nähe des Orts des Atoms oder Objekts gebildet wird. Auf diese Weise kann sehr wirksam auf das Objekt oder das Atom Einfluss dahingehend genommen werden, dass eine Kraft bzw. ein Impuls auf das Objekt oder Atom von dem Lichtstrahl ausgeübt wird. Auf diese Weise lässt sich das Objekt oder Atom manipulieren bzw. bewegen, in seiner Position halten oder in seiner Position verschieben.

Eine bevorzugte Ausführungsform der Vorrichtung sieht vor, dass die Lichtquelle ein Laser bzw. eine Laserlichtquelle ist. Die Lichtquelle strahlt kurzwellige elektromagnetische Strahlung aus; dieser Lichtstrahl oder Strahl ist ein Laserstrahl. Besonders bevorzugt weist der erzeugte Laserstrahl eine Wellenlänge zwischen 200 Nanometern und 11 Mikrometern auf. Sehr bevorzugt liegt die Wellenlänge des Laserstrahls zwischen 270 Nanometern und 500 Nanometern und ebenfalls sehr bevorzugt zwischen 900 Nanometern und 1100 Nanometern.

Eine bevorzugte Ausführungsform sieht vor, dass die 3D-Beweglichkeit des optischen Elements in alle Raumrichtungen gegeben ist. Vorzugsweise ist die 3D-Beweglichkeit in alle Raumrichtungen derart gegeben, dass das Atom oder Objekt in alle Raumrichtungen bewegbar ist. Besonders bevorzugt ist vorgesehen, dass wenigstens in Strahlrichtung des Strahls eine Bewegbarkeit ermöglicht wird. Eine Bewegung in einzelnen Raumrichtungen kann vorzugsweise separat und unabhängig voneinander erfolgen. Es ist also möglich, in dem in XYZ-Koordinaten aufgespannten Raum eine Bewegung des Fokuspunkts in X-Richtung oder eine Bewegung in Y-Richtung oder in Z-Richtung durchzuführen bzw. eine derartige Bewegung des Atoms oder Objekts zu bewirken. Die einzelnen Bewegungen können gleichzeitig oder zeitlich nacheinander erfolgen. Sie können erfolgen, ohne dass eine Bewegung in eine der anderen Raumrichtungen stattfindet oder beeinflusst wird. Sie können auch gemeinsam erfolgen, sodass eine beliebige Richtung im Raum erzeugt werden kann.

In einer weiteren bevorzugten Ausführungsform wird von der Lichtquelle ein Strahl oder Laserstrahl erzeugt, der - jedenfalls teilweise oder abschnittsweise - divergent oder konvergent ist. Der Laserstrahl ist also - jedenfalls teilweise oder abschnittsweise - fokussiert oder defokussiert, bevorzugt am Ort des optischen Elements. Ein derartiger Laserstrahl kann beispielsweise durch die optionale Objektivlinse oder die Linse zwischen Lichtquelle und optischem Element erzeugt werden. Hierbei ist es wichtig, dass das optische Element nicht in einem Fokuspunkt des Laserstrahls angeordnet ist. Der Laserstrahl ist also am Ort des optischen Elements defokussiert. Er kann divergent oder bevorzugt konvergent sein. Auch in dem Fokuspunkt, also an dem Ort, an dem das Atom oder Objekt angeordnet ist, ist der Laserstrahl ebenfalls divergent oder konvergent. Dies wird vorzugsweise durch die Objektivlinse hervorgerufen. Der Laserstrahl ist also in dem Ort, an dem das Atom oder Objekt angeordnet sind, fokussiert.

Vorzugsweise ist das optische Element in einem Bereich im Strahlengang angeordnet, in dem der Strahl divergent oder konvergent ist. Das optische Element befindet sich also in einem defokussierten Bereich des Strahls, folglich außerhalb eines Fokus.

In einer ebenfalls bevorzugten Ausführungsform der Vorrichtung ist das optische Element ein Spiegel. Der Spiegel kann beispielsweise und bevorzugt ein MEMS-Spiegel sein. Diese Spiegel lassen sich besonders schnell und präzise steuern bzw. bewegen, sodass deren räumliche Position schnell und einfach verändert werden kann. Beispielsweise werden MEMS-Spiegel elektrisch angesteuert, sodass die elektrischen Signale schnell an den Spiegel weitergegeben und die gewünschte Wirkung hervorgerufen werden kann.

In einer bevorzugten Ausführungsform ist das optische Element mit Auflagepunkten gelagert. Bevorzugt sind drei Auflagepunkte vorgesehen, besonders bevorzugt vier Auflagepunkte. Die Auflagepunkte sind im Raum veränderbar, besonders bevorzugt jeweils unabhängig voneinander und sehr bevorzugt ist eine translatorische Änderung im Raum möglich. Damit lässt sich auch eine Verschiebung des Fokuspunktes des Strahls der Laserquelle bzw. Lichtquelle in Strahlrichtung oder entgegen der Strahlrichtung bewirken. Somit kann der Laserfokus auch in einer dritten Dimension verändert werden, wodurch das Atom oder das Objekt auch in Strahlrichtung bewegt werden kann.

In einer bevorzugten Ausführungsform ist das optische Element ein Array aus Spiegeln. Besonders bevorzugt besteht das Array aus MEMS-Spiegeln. Auf diese Weise lassen sich mehrere optische Elemente zusammenfassen und schnell und einfach in ihrer Lage verändern. In einer Ausführungsform sind die MEMS-Spiegel jeweils auf drei oder auf vier Auflagepunkten gelagert, sodass eine Bewegung sowohl in Form eines Verkippens oder Verdrehens als auch in Form einer translatorischen Bewegung möglich ist.

In einer bevorzugten Ausführungsform umfasst die Lichtquelle mehrere Laser, wobei ebenfalls bevorzugt das optische Element als Array aus MEMS-Spiegeln ausgebildet ist. Besonders bevorzugt sind die mehreren Laser der Lichtquelle so ausgebildet und eingerichtet, dass je ein Laser auf einen Spiegel oder MEMS-Spiegel des Arrays gelenkt wird. Hierdurch ist es möglich, gleichzeitig mehrere Fokuspunkte zu bilden, sodass mehrere Objekte und mehrere Atome gleichzeitig verschoben, beeinflusst, bewegt und/oder manipuliert werden können. Auch ist es möglich, ein Atom in seiner Lage verharren zu lassen, sodass keine weitere Bewegung erfolgt, auch wenn andere Kräfte von außen auf das Atom einwirken können.

In einer bevorzugten Ausführungsform ist das Array aus mehreren MEMS-Spiegeln gebildet, auf denen das optische Element basiert. Die einzelnen MEMS-Spiegel sind unabhängig voneinander bewegbar. Bevorzugt sind sie gleichzeitig bewegbar. In einer alternativen Ausführung sind die MEMS-Spiegel des Arrays zu unterschiedlichen Zeitpunkten bewegbar, also unabhängig nicht nur in der räumlichen Bewegung, sondern auch in der zeitlichen Bewegung der einzelnen Spiegel. Damit lässt sich ein Array aufbauen, in dem mehrere Spiegel unabhängig voneinander gesteuert werden können.

Im Zusammenhang mit der Verwendung von mehreren Laserquellen kann so eine Vorrichtung aufgebaut werden, in der mehrere Atome oder mehrere Objekte gleichzeitig und unabhängig voneinander in allen Raumdimensionen bewegt oder manipuliert werden können. Wenn die Lichtquelle mehrere Laser umfasst, schließt dies auch ein, dass die Lichtquelle einen Laser hat und der durch eine optische Anordnung aufgesplittet wird, sodass mehrere gelenkte Laserstrahlen oder Strahlen erzeugt werden. Dies kann beispielsweise durch eine Anordnung von mehreren halbdurchlässigen Spiegeln oder durch ein Array von Microlinsen erfolgen. Alternativ können auch Phasenmodulatoren (SLM) oder 2D-akusto-optische Deflektoren eingesetzt werden, die mit mehreren Frequenzen gleichzeitig betrieben werden. Auf diese Weise kann für manche Einsatzanforderungen lediglich ein Laser als Lichtquelle verwendet werden.

Eine derartige Vorrichtung oder eine Vorrichtung wie oben beschrieben ist geeignet, um in einem Quantencomputer eingesetzt zu werden. Es wird also ein Quantencomputer gebildet, der über eine oder mehrere der oben genannten Vorrichtungen verfügt.

Bevorzugt ist ein Quantencomputer, in dem eine oben beschriebene Vorrichtung und eine Vielzahl von Spiegeln oder ein Array von Spiegeln vorgesehen sind. Beispielsweise ist es möglich, auf alle oder nur einen Teil der vorhanden Qubits des Quantencomputers einzuwirken, etwa auf ein oder mehrere Register oder auf einen oder mehrere Speicherblöcke.

Bevorzugt ist die Anzahl der Spiegel auf die Anzahl der zu manipulierenden Qubits in dem Quantencomputer abgestimmt. In einer weiter bevorzugten Ausführungsform ist die Anzahl der Spiegel wenigstens ein Hundertstel bis ein Zehntel der Anzahl der manipulierenden Qubits. Weiter bevorzugt entspricht die Anzahl der Spiegel der Anzahl der manipulierenden Qubits; sehr bevorzugt entspricht die Anzahl der zu manipulierenden Qubits einem Vielfachen der Spiegel des Arrays, besonders bevorzugt einem ganzzahligen Vielfachen der Spiegel.

Bevorzugt ist ein Quantencomputer, in dem eine oben beschriebene Vorrichtung und ein MEMS-Array vorgesehen sind, d. h. ein Array aus mehreren MEMS-Spiegeln. Bevorzugt ist dabei die Anzahl der Spiegel größer oder gleich der Anzahl der zu manipulierenden Qubits in dem Quantencomputer. In einer besonders bevorzugten Ausführungsform ist die verwendete Anzahl der Spiegel in dem Array so gestaltet, dass die Anzahl der zu manipulierenden Qubits in dem Quantencomputer einem ganzzahligen Vielfachen der Spiegel bzw. der MEMS-Spiegel des Arrays entspricht. In diesem Fall kann ein Spiegel mehrere Qubits manipulieren, entweder gleichzeitig durch Aufspaltung des Strahlengangs oder zeitlich nacheinander durch eine entsprechende Steuerung.

Die oben beschriebene Vorrichtung lässt sich also beispielsweise in einem Quantencomputer einsetzen. Das Gebiet der Neutralatom-Quantencomputer expandiert aktuell sehr stark. Eine erfindungsgemäße Vorrichtung oder eine optische Pinzette, die auf der erfindungsgemäßen Vorrichtung basiert, können ein Baustein eines derartigen Neutralatom-Quantencomputers sein. Durch die 3D-Beweglichkeit der optischen Pinzetten bzw. der Vorrichtung lassen sich Quantenalgorithmen besser und schneller hardwarenah umsetzen.

Eine andere Verwendung der Vorrichtung liegt in der Materialbearbeitung. Beispielsweise ist es möglich, mit mehreren fokussierten Strahlen oder Laserstrahlen gleichzeitig in drei Dimensionen Material zu bearbeiten. Hierdurch erhöht sich die Bearbeitungsgeschwindigkeit beträchtlich im Vergleich zu bisher bekannten Verfahren oder Verfahren mit einem einzelnen Strahl. Insbesondere weist die Verwendung der erfindungsmäßigen Vorrichtung den Vorteil auf, dass hier auch eine Bearbeitung in der dritten Dimension erfolgen kann. Dies wird bisher lediglich durch eine Abstandsänderung zum Werkstück ermöglicht. Dazu muss das Werkstück in eine neue Position bewegt werden. Dies ist umständlich, teuer und unpräzise. Bei Verwendung der erfindungsgemäßen Vorrichtung kann Material gezielt entfernt werden oder Material kann gezielt lokal in seinen Eigenschaften verändert werden.

Eine weitere Verwendungsmöglichkeit der Vorrichtung ist im Bereich der Beeinflussung von Mikropartikeln oder Nanopartikeln, bevorzugt in biologischen Proben, gegeben. Beispielsweise können derartige Partikel in biologischen Proben in drei Raumdimensionen relativ zueinander besser positioniert und schnell bewegt werden. Das erhöht die Vielzahl der möglichen Untersuchungen, insbesondere im Hinblick auf dynamische Aspekte. Hier ist ein großes Anwendungspotenzial in der Forschung gegeben.

Vor allem können derartige Verwendungen in konfokalen Mikroskopen als optische Pinzetten erfolgen, sodass die Vorrichtung Teil eines Mikroskops sein kann. Derartige Geräte können mit der erfindungsgemäßen Vorrichtung erweitert werden, was zu vielfältigen Anwendungsmöglichkeiten im Bereich der Mikroskope führt. Bevorzugt ist also ein Mikroskop mit einer oben beschriebenen erfindungsgemäßen Vorrichtung in einer der möglichen Ausführungsformen oder in Kombination von mehreren optionalen Ausbildungsmöglichkeiten.

Ebenfalls ist es möglich, die erfindungsgemäße Vorrichtung als optische Pinzette zu verwenden. Die Vorrichtung kann also Teil einer optischen Pinzette sein.

Bevorzugt ist ein System, das eine Mehrzahl von optischen Pinzetten umfasst, wobei die optischen Pinzetten eine Vorrichtung, wie oben beschrieben, umfassen oder auf einer derartigen Vorrichtung beruhen.

Im Rahmen der Erfindung hat sich gezeigt, dass die technische Umsetzung schwierig ist, um Atome oder Objekte gleichzeitig unabhängig voneinander im Raum zu bewegen oder zu manipulieren. Erst durch die Möglichkeit, mehrere optische Pinzetten gleichzeitig und unabhängig voneinander zu bewegen, ergibt sich die Möglichkeit einer dreidimensionalen Manipulation von Atomen oder Objekten, die sowohl eine transversale als auch eine translatorische Bewegung ermöglichen. Im Rahmen der Erfindung wurde erkannt, dass dies durch ein optisches Element erfolgen kann, das selbst eine 3D-Bewegung ermöglicht, also translatorische, rotatorische und/oder Kipp-Bewegungen ausführt. Darüber hinaus wurde erkannt, dass dieses optische Element bei der Verwendung von divergenten oder konvergenten Strahlen außerhalb eines Fokuspunktes liegen muss und dass der abgelenkte oder umgelenkte Strahl im Strahlengang hinter dem optischen Element mittels einer Objektivlinse bevorzugt derart beeinflusst wird, dass ein Fokuspunkt gebildet wird. Dieser Fokuspunkt lässt sich durch Bewegung des optischen Elements gleichzeitig in alle drei Raumrichtungen bewegen, also sowohl transversal in Strahlengangrichtung oder Strahlrichtung als auch in einer Ebene senkrecht zur Strahlrichtung. Darunter ist eine Ebene zu verstehen, deren Normalenvektor parallel zur Strahlrichtung ausgerichtet ist.

Erst durch die gleichzeitige Bewegung in alle drei Raumrichtungen ergibt sich ein großes Feld von Anwendungsmöglichkeiten. Dies lässt sich nicht dadurch realisieren, dass ein translatorisch bewegtes optisches Element mit einem transversal bewegbaren optischen Element gekoppelt wird. Insbesondere lässt sich die Bewegung des Fokuspunktes unabhängig von einer Bewegung des zu manipulierenden Atoms oder Objekts erzielen. Nur so ist es möglich, die Lage des Objekts oder Atoms gezielt zu verändern, zu beeinflussen, zu stabilisieren oder zu fixieren.

Viele Anwendungsmöglichkeiten eröffnen sich durch den nun möglichen parallelisierten Einsatz von mehreren erfindungsgemäßen Vorrichtungen bzw. optischen Pinzetten. Dabei arbeiten die Vorrichtungen bzw. Pinzetten unabhängig voneinander.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine erfindungsgemäße optische Vorrichtung zum Manipulieren eines Atoms oder Objekts;
- Figur 2: eine erweiterte Vorrichtung mit insgesamt 2 Strahlen zur Manipulation eines Atoms;
- Figur 3: die erweitere Vorrichtung aus Figur 2 mit vereinfachtem Strahlengang;
- Figur 4: eine erweiterte Vorrichtung mit insgesamt 5 Strahlen mit stark vereinfachtem Strahlengang;
- Figur 5: ein als Array ausgebildetes optisches Element der erfindungsgemäßen Vorrichtung; und
- Figur 6: den prinzipiellen Verfahrensablauf eines Verfahrens zum Manipulieren eines Atoms oder Objekts.

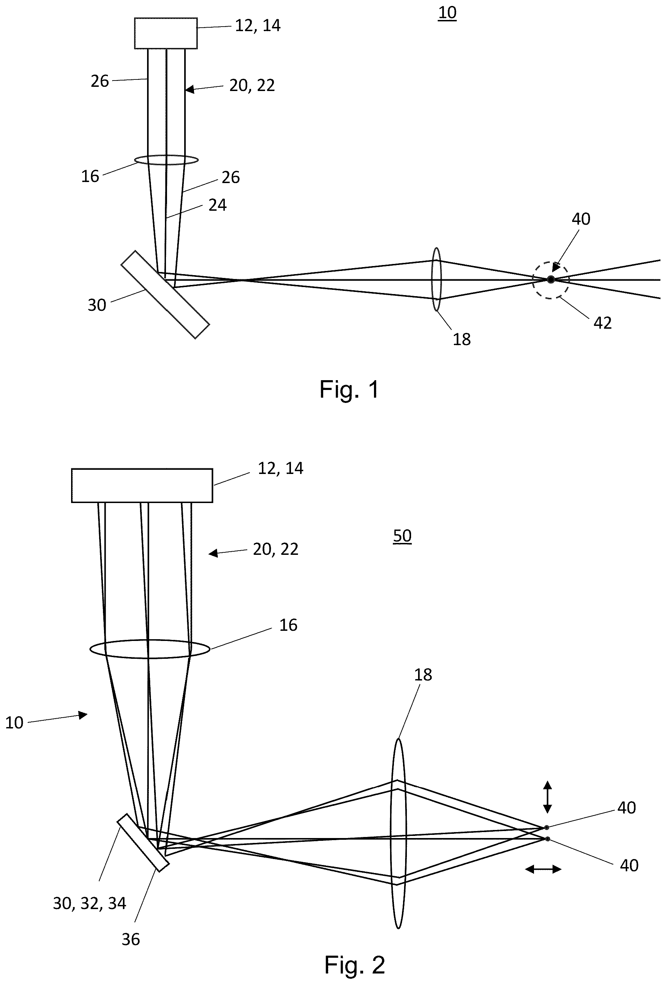

Figur 1 zeigt eine erfindungsgemäße Vorrichtung 10 zum Manipulieren eines Atoms oder eines Objekts. Die Vorrichtung 10 hat eine Lichtquelle 12 zum Aussenden eines kurzwelligen elektromagnetischen Strahls 20 und hat weiter ein bewegbares optisches Element 30, das eine 3D-Beweglichkeit aufweist.

Die Lichtquelle 12 ist vorzugsweise als Laser 14 oder Laserquelle ausgebildet, die einen Laserstrahl 22 aussendet. Der Strahl 20 bzw. Laserstrahl 22 der Lichtquelle 12 bzw. des Lasers 14 wird von der Lichtquelle 12 zu dem optischen Element 30 gelenkt und im Strahlengang danach in einem Fokuspunkt 40 fokussiert.

Der Strahl 20 wird in Figur 1 durch eine mittlere Strahlachse 24 und zwei Begrenzungsachsen 26 dargestellt, wobei die Strahlachse 24 das Intensitätsmaximum und die jeweiligen Begrenzungsachsen 26 das "Quasi-Intensitätsminimum" des Strahls 20 darstellen. Das "Quasi-Intensitätsminimum" hat typischerweise eine Intensität von 1/e² der Maximalintensität. Der Strahl 20 ist also eine Strahlverteilung oder Intensitätsverteilung in der hier dargestellten Figur.

Zwischen der Lichtquelle 12 und dem optischen Element 30 ist eine Linse 16 angeordnet, um den zunächst parallel verlaufenden Strahl 20 (Begrenzungsachsen 26 sind parallel) zu einem konvergierenden Strahl 20 zu wandeln, so dass der konvergierende Strahl 20 auf das optische Element 30 trifft. Das optische Element 30 ist so angeordnet, dass es nicht im Fokuspunkt des Strahls 20 liegt.

Nach Umlenkung des Strahls 20 an dem reflektierenden optischen Element 30 wird der weiterhin konvergierende Strahl 20 nach Durchlaufen eines Zwischenfokus zu einem nun divergierenden Strahl 20, der mittels einer Objektivlinse 18 wieder in einen konvergierenden Strahl 20 gewandelt wird und in einem Fokuspunkt 40 fokussiert.

Beim Auftreffen des Strahls 20 auf ein Atom oder ein Objekt wird eine in Richtung Fokuspunkt 40 gerichtete Kraft oder ein Impuls auf das Atom bzw. Objekt ausgeübt. Dazu muss das Atom oder Objekt in einer Umgebung 42 um den Fokuspunkt 40 angeordnet sein. Die Größe der Umgebung 42 kann von der Anwendung und dem Einsatz der Vorrichtung 10 abhängig sein sowie von dem Strahl 20 bzw. Laserstrahl 22 und deren Wellenlänge. Darüber hinaus kann die Größe der Umgebung 42, in der eine gewünschte Wirkung auf das Atom oder Objekt hervorgerufen wird, auch von dem Atom oder Objekt, dessen Größe (Ausdehnung) oder Masse abhängen.

Das optische Element 30 ist als Spiegel 32 ausgebildet. Der Spiegel 32 kann ein MEMS-Spiegel 34 sein, was bevorzugt ist. Der Spiegel 32 ist bevorzugt als kreisförmiger Spiegel ausgebildet und hat einen Durchmesser, der bevorzugt zwischen 0,5 mm und 1 mm liegt. Der Hub des Spiegels 32, also die Beweglichkeit in transversale Richtung bzw. in Richtung der Oberflächen des Spiegels 32, liegt bevorzugt zwischen 0,05 mm und 2 mm, weiter bevorzugt zwischen 0,05 mm und 1 mm, besonders bevorzugt zwischen 0,1 mm und 0,25 mm.

Die Linse 16 sowie die Objektivlinse 18 haben in der Regel einen bevorzugten Durchmesser von 15 mm bis 70 mm; besonders bevorzugt liegt der Durchmesser zwischen 20 mm und 50 mm. Der Strahl 20, der als Laserstrahl 22 oder als Laserstrahlbündel ausgebildet sein kann, hat einen Durchmesser, der ca. 30 mm bis 40 mm groß ist, bevorzugt zwischen 25 mm und 50 mm liegt. Insgesamt liegt die Wegstrecke des Strahls 20 von der Lichtquelle 12 bis zum Fokuspunkt 40 bei ca. 1 m bis 2 m, bevorzugt liegt die Wegstrecke zwischen 50 mm und 600 mm, besonders bevorzugt zwischen 100 mm und 200 mm. Die Länge, der Abstand im Strahlgang zwischen der Lichtquelle 20 und dem Fokuspunkt 40, kann je nach Anwendungsart und Einsatzgebiet oder Verwendung variieren und durchaus größer oder kleiner sein.

Figur 2 zeigt ein System 50 mit zwei optischen Pinzetten, die auf der Vorrichtung 10 basieren. Die beiden Strahlen 20 treffen auf unterschiedliche Bereiche des optischen Elements 30, sodass nach Durchgang durch die Objektivlinse 18 zwei nebeneinander angeordnete Fokuspunkte 40 gebildet werden. Die Fokuspunkte 40 sind unabhängig voneinander bewegbar und veränderbar, jedenfalls wenn das optische Element 30 durch mehrere Spiegel 32 oder ein Array 36 mit mehreren Spiegeln 32 oder mehreren MEMS-Spiegeln 34 gebildet wird. Die einzelnen Spiegel 32 können dabei unabhängig voneinander bewegt werden.

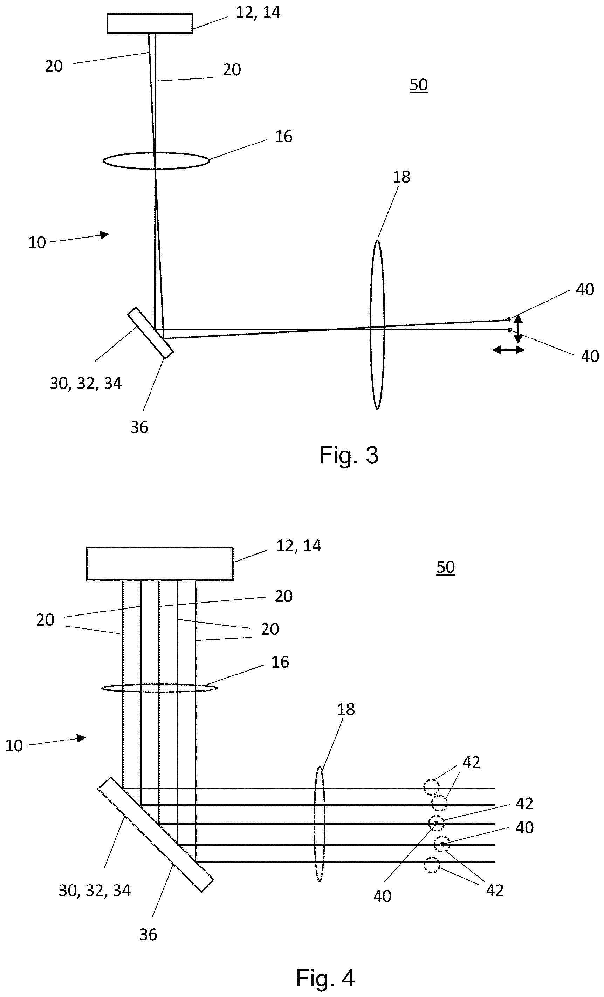

Figur 3 zeigt die Ausführungsform gemäß Figur 2. Die Strahlen 20 werden zur besseren Ansicht jedoch nur durch einen Einzelstrahl repräsentiert. Da die Strahlen 20 alle durch den Mittelpunkt der Linse 16 verlaufen und auf unterschiedliche Spiegel 32 des optischen Elements 30 treffen, bilden sich die gewünschten zwei Fokuspunkte 40 aus, die unabhängig voneinander bewegbar sind, und zwar in transversaler Richtung und in lateraler Richtung bzw. in einer Ebene senkrecht zur transversalen Richtung.

Figur 4 zeigt ein System 50 mit mehreren optischen Pinzetten, die auf der Vorrichtung 10 basieren. Eine Lichtquelle 12 sendet mehrere Strahlen 20 aus, von denen jeweils lediglich die Strahlachse 24 gezeigt ist. Diese Strahlen 20 entsprechen den Strahlen 20 aus Figur 1 bzw. Figur 2 und sind beim Auftreffen auf das optische Element 30 konvergent oder divergent. Sie werden nach Umlenkung an dem optischen Element 30 mittels mehrerer Objektivlinsen 18 jeweils in einem Fokuspunkt 40 fokussiert. In Figur 4 ist aus Gründen der Übersichtlichkeit lediglich die jeweilige Umgebung 42 eines Fokuspunkts 40 sowie eine Objektivlinse 18 und eine Linse 16 anstatt einer Mehrzahl (hier fünf) von parallel angeordneten Objektivlinsen bzw. Linsen dargestellt. Für jeden Strahl 20 ist also eine eigene Linse 16 und/oder Objektivlinse 18 vorgesehen.

Zum besseren Verständnis und aus Gründen der Übersichtlichkeit sind die Strahlen 20 hier parallel verlaufend dargestellt. Da die Strahlen 20 durch verschiedene Bereiche der Linse 16 geführt werden, können sie im Wesentlichen nebeneinander oder parallel verlaufen. Es ist auch hier möglich, die Strahlen 20 durch den Mittelpunkt oder einen gemeinsamen Punkt bzw. Bereich der Linse 16 zu lenken, wobei sie sich dann kreuzen können.

Die Lichtquelle 12 kann alternativ mehrere Lichtquellen 12 oder mehrere Laser 14 umfassen, die jeweils einen Strahl 20 bzw. ein Strahlenbündel aus Laserstrahlen 22 erzeugen. Die Strahlen 20 eines Strahlenbündels können kollimiert sein. Die einzelnen Strahlen 20 sind jedoch ebenfalls divergent bzw. konvergent und werden in dem Fokuspunkt 40 fokussiert. Hierbei ist es wichtig, dass sie als konvergente oder divergente Strahlen 20 auf das optische Element 30 auftreffen.

Genau wie bei der Vorrichtung 10 aus Figur 1 ist zwischen der Lichtquelle 12 und dem optischen Element 30 eine Linse 16 angeordnet, um den jeweiligen Strahl 20 entsprechend in einer vordefinierten Weise zu formen. Die Strahlen 20 werden jeweils derart geformt, dass sie beim Auftreffen auf das optische Element 30 konvergent oder divergent sind. Dabei liegt das optische Element 30 außerhalb eines Fokus des Strahls 20 bzw. der Strahlen 20. Die Linse 16 kann alternativ durch mehrere Linsen 16 gebildet werden, sodass für jeden Strahl 20 eine einzelne Linse 16 vorgesehen ist.

Im Strahlengang hinter dem optischen Element 30 ist eine Objektivlinse 18 angeordnet, um die Strahlen 20 in je einem Fokuspunkt 40 zu fokussieren. Selbstverständlich ist es möglich, dass die Objektivlinse 18 Teil eines Objektivs ist oder durch ein Objektiv ersetzt wird. Es können auch weitere optische Komponenten zusätzlich in den Strahlengang eingebracht sein, insbesondere nach dem optischen Element 30.

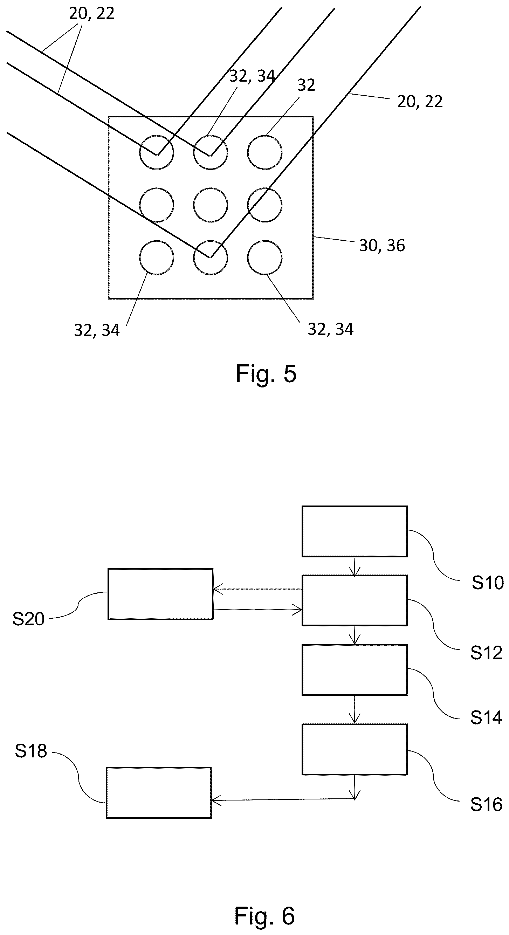

Das optische Element 30 ist bevorzugt ein Array 36 aus mehreren Spiegeln 32 oder mehreren MEMS-Spiegeln 34. Die einzelnen Spiegel 32 können beispielsweise in Reihen und Spalten nebeneinander angeordnet sein (Figur 5). Die einzelnen Spiegel 32 lassen sich unabhängig voneinander bewegen und einstellen, sodass für jeden Strahl 20 ein eigener Fokuspunkt 40 und eine entsprechende Umgebung 42 gebildet werden, die unabhängig voneinander sind und in ihrer Lage und Position voneinander verschieden sind, auch relativ zu den anderen Strahlen 20. Auf diese Weise ist es möglich, mehrere Atome oder Objekte gleichzeitig und unabhängig voneinander zu manipulieren, also zu bewegen, zu verschieben, festzuhalten oder zu fixieren.

Ein als Array 36 ausgebildetes optisches Element 30 ist in Figur 5 im Detail gezeigt. In der hier gezeigten Ausbildung weist das Array 36 neun Spiegel 32 auf, die als MEMS-Spiegel 34 ausgebildet sind und in Form einer 3x3-Matrix angeordnet sind. Die Spiegel 32 oder MEMS-Spiegel 34 sind an mehreren Auflagepunkten, bevorzugt an vier Auflagepunkten, gelagert, so dass eine Lageänderung der Spiegel 32 bzw. MEMS-Spiegel 34 möglich ist.

Die einzelnen Strahlen 20 treffen auf den ihnen zugeordneten Spiegel 32 und werden von diesem reflektiert. Durch Änderung der Lage des Spiegels 32, also durch ein Verkippen oder durch ein Anheben und Absenken um einen vorgegebenen Hub, erfolgt eine Verschiebung und Veränderung des Fokuspunkts 40 im Strahlengang. Auf diese Weise können auf in der Umgebung 42 des Fokuspunkts 40 angeordnete Atome oder Objekte eine Kraft oder ein Impuls ausgeübt werden, um deren Lage zu beeinflussen oder zu manipulieren.

Figur 6 zeigt eine schematische Darstellung des Verfahrensablaufs zum Manipulieren eines Objekts oder eines Atoms, das mehrere Schritte umfasst.

In einem ersten Schritt S10 wird von einer Lichtquelle 12 kurzwellige elektromagnetische Strahlung ausgesendet. Die Lichtquelle 12 ist beispielsweise ein Laser 14, der einen Laserstrahl 22 aussendet. Optional kann zusätzlich eine Strahlformung beispielsweise mittels einer Linse 16 erfolgen.

In einem Schritt S12 erfolgt eine Beeinflussung des ausgesendeten Strahls 20 mittels eines optischen Elements 30. Hierbei wird der optische Strahl 20 umgelenkt. Das optische Element 30 ist also reflektiv ausgebildet und reflektiert den eintreffenden Strahl 20.

In einem weiteren Schritt S14 wird der eintreffende Strahl 20 weitergeleitet mittels des optischen Elements 30 und zwar in der Art, dass der Strahl 20 im Strahlengang nach dem optischen Element 30 in einem Fokuspunkt 40 fokussiert wird. Optional kann in einem weiteren Schritt eine Strahlformung zwischen dem optischen Element 30 und dem Fokuspunkt 40 mittels einer Objektivlinse 18 oder eines Objektivs erfolgen.

Ein Schritt S16 sieht ein dreidimensionales Bewegen des optischen Elements 30 derart vor, dass der Fokuspunkt 40 verschiebbar ist und verschoben wird. Auf diese Weise wird eine Manipulation eines Atoms oder Objekts erreicht, das in der Umgebung 42 um den jeweiligen Fokuspunkt 40 angeordnet ist. Das in der Umgebung 42 befindliche Atom oder Objekt kann so verschoben oder auch fixiert werden. Diese Wirkung ist in Figur 4 als Schritt S18 dargestellt, der das Manipulieren des Atoms oder Objekts in der Umgebung 42 umfasst.

In einem optionalen Schritt S20 wird die 3D-Beweglichkeit des optischen Elements 30 dadurch erzielt, dass eine translatorische Bewegung oder ein Verkippen des jeweiligen optischen Elements 30 vorgenommen wird. Bevorzugt erfolgt dies aus einer Position, bei der der Normalenvektor des optischen Elements 30 parallel zur translatorischen Bewegung ausgerichtet ist. Somit erfolgt ein translatorisches Bewegen oder Anheben des optischen Elements 30 entlang seines Normalenvektors, der parallel zum Strahlengang ausgerichtet ist. Nach einem Verkippen des optischen Elements 30 weist der Normalenvektor des optischen Elements 30 einen Winkel größer 0° zu der translatorischen Bewegung auf. Wenn das optische Element 30 aus mehreren Spiegeln 32 aufgebaut ist, beispielsweise in einem Array 36, so erfolgt die 3D-Beweglichkeit gemäß Schritt S20 für jeden der einzelnen Spiegel 32 unabhängig voneinander.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nichtflüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme. Bezugszeichen in den Patentansprüchen sind nicht einschränkend zu verstehen.

### Bezugszeichenliste

- 10: Vorrichtung
- 12: Lichtquelle
- 14: Laser
- 16: Linse
- 18: Objektivlinse
- 20: Strahl
- 22: Laserstrahl
- 24: Strahlachse
- 26: Begrenzungsachse
- 30: optisches Element
- 32: Spiegel
- 34: MEMS-Spiegel
- 36: Array
- 40: Fokuspunkt
- 42: Umgebung
- 50: System

## Patentansprüche

1. Optische Vorrichtung (10) zum Manipulieren eines Atoms oder eines Objekts umfassend
- eine Lichtquelle (12) zum Aussenden eines kurzwelligen elektromagnetischen Strahls (20); und
- ein bewegbares optisches Element (30) zur Beeinflussung des Strahls (20);
**dadurch gekennzeichnet, dass**
- das optische Element (30) eine 3D-Beweglichkeit aufweist;
- der Strahl (20) der Lichtquelle (12) zu dem optischen Element (30) gelenkt wird und im Strahlengang danach in einem Fokuspunkt (40) fokussiert wird;
- wobei das optische Element (30) derart eingerichtet und ausgebildet ist, dass durch die Bewegung des optischen Elements (30) der Fokuspunkt (40) verschiebbar ist und eine räumliche Manipulation des Atoms oder Objekts in einer Umgebung (42) um den Fokuspunkt (40) bewirkt wird.

2. Vorrichtung (10) nach Anspruch 1, **dadurch gekennzeichnet, dass** im Strahlengang zwischen dem optischen Element (30) und dem Fokuspunkt (40) eine Objektivlinse (18) angeordnet ist und/oder im Strahlengang zwischen Lichtquelle (12) und optischem Element (30) eine Linse (16) angeordnet ist.

3. Vorrichtung (10) nach einem der vorhergehenden Ansprüche, **dadurch gekennzeichnet, dass** der Fokuspunkt (40) in der räumlichen Ausdehnung des Atoms oder des Objekts liegt.

4. Vorrichtung (10) nach einem der vorhergehenden Ansprüche, **dadurch gekennzeichnet, dass** die Lichtquelle (12) ein Laser (14) ist und der kurzwellige elektromagnetische Strahl (20) ein Laserstrahl (22) ist, wobei der Laserstrahl (22) bevorzugt eine Wellenlänge zwischen 200 Nanometern und 11 Mikrometern aufweist, besonders bevorzugt zwischen 270 Nanometern und 1100 Nanometern.

5. Vorrichtung (10) nach einem der vorhergehenden Ansprüche, **dadurch gekennzeichnet, dass** die 3D-Beweglichkeit des optischen Elements (30) in alle Raumrichtungen derart gegeben ist, dass das Atom oder Objekt in alle Raumrichtungen bewegbar ist, bevorzugt wenigstens in Strahlrichtung des Strahls (20), wobei eine Bewegung in die einzelnen Raumrichtungen separat und unabhängig voneinander erfolgen kann.

6. Vorrichtung (10) nach einem der vorhergehenden Ansprüche **dadurch gekennzeichnet, dass** die Lichtquelle (12) einen Laserstrahl (22) erzeugt, der divergent oder konvergent ist bzw. der fokussiert oder defokussiert ist.

7. Vorrichtung (10) nach dem vorhergehenden Anspruch, **dadurch gekennzeichnet, dass** das optische Element (30) in einem Bereich im Strahlengang angeordnet ist, in dem der Strahl (20) divergent oder konvergent ist, bevorzugt in einem defokussierten Bereich des Strahls (20).

8. Vorrichtung (10) nach einem der vorhergehenden Ansprüche, **dadurch gekennzeichnet, dass** das optische Element (30) ein Spiegel (32) ist, bevorzugt ein MEMS-Spiegel (34).

9. Vorrichtung (10) nach einem der vorhergehenden Ansprüche, **dadurch gekennzeichnet, dass** das optische Element (30) drei Auflagepunkte, bevorzugt vier Auflagepunkte aufweist, die bevorzugt im Raum veränderbar sind, besonders bevorzugt jeweils unabhängig voneinander und sehr bevorzugt translatorisch und/oder rotatorisch im Raum veränderbar sind.

10. Vorrichtung (10) nach einem der vorhergehenden Ansprüche **dadurch gekennzeichnet, dass** das optische Element (30) ein Array (36) aus Spiegeln (32) ist, bevorzugt aus MEMS-Spiegeln (34).

11. Vorrichtung (10) nach dem vorhergehenden Anspruch **dadurch gekennzeichnet, dass** die Lichtquelle (12) mehrere Laser (14) umfasst, wobei bevorzugt je ein Laser (14) auf einen Spiegel (32) oder MEMS-Spiegel (34) des Arrays (36) gelenkt wird.

12. Vorrichtung (10) nach Anspruch 10, **dadurch gekennzeichnet, dass** die MEMS-Spiegel (34) des Arrays (36) unabhängig voneinander bewegbar sind, bevorzugt gleichzeitig oder zu unterschiedlichen Zeitpunkten bewegbar sind

13. Quantencomputer mit einer Vorrichtung (10) nach einem der vorhergehenden Ansprüche 1 bis 12.

14. Quantencomputer nach Anspruch 13 und mit einem Array (36) von Spiegeln (32), wobei die Anzahl der Spiegel (32) auf die Anzahl der manipulierenden Qubits abgestimmt ist, bevorzugt die Anzahl der Spiegel (32) wenigstens ein Hundertstel bis ein Zehntel der Anzahl der manipulierenden Qubits ist, weiter bevorzugt die Anzahl der Spiegel (32) der Anzahl der manipulierenden Qubits entspricht, sehr bevorzugt die Anzahl der zu manipulierenden Qubits einem Vielfachen der Spiegel (32) des Arrays (36) entspricht, besonders bevorzugt einem ganzzahligen Vielfachen der Spiegel (32) des Arrays (36).

15. Verwendung der Vorrichtung (10) nach einem der Ansprüche 1 bis 12 in einem Quantencomputer oder einer Quantencomputer-Plattform, die auf der Basis neutraler Atome funktionieren.

16. Verwendung einer Vorrichtung (10) nach einem der vorhergehenden Ansprüche 1 bis 11 zur Materialbearbeitung, bevorzugt um Material gezielt zu entfernen oder ebenso bevorzugt um in einem Material lokal Eigenschaften zu verändern.

17. Verwendung der Vorrichtung (10) nach einem der Ansprüche 1 bis 11 zur Beeinflussung von Mikropartikeln oder Nanopartikeln, bevorzugt in biologischen Proben, um die Mikropartikel oder Nanopartikel in drei Raumrichtungen relativ zueinander zu positionieren und zu bewegen.

18. Optische Pinzette mit einer Vorrichtung (10) nach einem der Ansprüche 1 bis 11.

19. System (50) umfassend eine Mehrzahl von optischen Pinzetten, wobei die optischen Pinzetten auf einer Vorrichtung (10) nach einem der Ansprüche 1 bis 12 basieren.

20. Verfahren zum Manipulieren eines Atoms oder eines Objekts umfassend die folgenden Schritte:
- Aussenden eines kurzwelligen elektromagnetischen Strahls (20) von einer Lichtquelle (12);
- Beeinflussung des ausgesendeten Strahls (20) mittels eines optischen Elements (30);
- Weiterleiten des eintreffenden Strahls (20) mittels des optischen Elements (30) derart, dass der Strahl (20) im Strahlengang nach dem optischen Element (30) in einem Fokuspunkt (40) fokussiert wird;
- dreidimensionales Bewegen des optischen Elements (30) derart, dass der Fokuspunkt (40) verschiebbar ist und verschoben wird, um eine Manipulation des Atoms oder Objekts in einer Umgebung (42) um den Fokuspunkt (40) zu bewirken, insbesondere um das Atom oder Objekt zu verschieben.

21. Verfahren nach dem vorhergehenden Anspruch, **dadurch gekennzeichnet, dass** das optische Element (30) eine 3D-Beweglichkeit aufweist und translatorisch bewegt und/oder verkippt werden kann, bevorzugt aus einer Position, bei der der Normalenvektor des optischen Elements (30) parallel zur translatorischen Bewegung ausgerichtet ist und nach dem Verkippen des optischen Elements (30) der Normalenvektor einen Winkel größer 0° zu der translatorischen Bewegung einnimmt.
